# EUROPEAN PATENT APPLICATION

(11) **EP 2 067 580 A1**
(43) Date of publication of application: **10.06.2009**
(21) Application number: 07122258.2
(22) Date of filing: 04.12.2007
(51) Int. Cl.: B25J 1/02, B25J 19/00, G01B 5/008, G01B 7/008, G01B 11/00, B25J 9/16

(54) **Articulated arm measuring machine endowed with automatic brake**

(71) Applicant: Metris IPR N.V., 3001 Leuven (BE)
(72) Inventor: Tomelleri, Raffaele, 37066 Sommacampagna (VR) (IT)
(74) Representative: Brants, Johan P.E.

(57) **Abstract**

The present invention relates to an automatic lock and release device for a portable articulated arm measuring machine, comprising a brake (20) configured for braking an axis (24) of the machine, controlled by an electronic unit that activates the brake. The device increases machine safety by preventing the machine from falling in the most likely falling conditions.

## Description

The present invention concerns an articulated arm measuring machine endowed with a brake applied on an axis of the machine, preferably the first horizontal axis. Articulated arm measuring machine typically comprise a number of elongate segments or links. Adjoining segments are mechanically connected by at least one joint which allows rotation of one segment with respect to the adjoining segment around an axis. The arm is attached to a base at one end, typically by at least one joint that permits rotation around an axis. The arm is attached at the other end to a sensor via at least one joint that also permits rotation around an axis. Such arms are well known in the art. The joints employed usually joints allow hinged movement and/or axial rotation between consecutive segments, or between the first segment and the base, or between the last segment and the sensor. The arm is able to determine the cartesian co-ordinates of a sensor relative to the base. They are well known in the art.

The portable articulated arm measuring machines, although endowed with a balancing system, are not able to hold their position in any arm configuration without being supported by the hand of the operator, so they are subject to fall in case the operator lets go his hold.
Further there are other risks, as the fall of the arm when it is vertical in home position, in case of an accidental shock may make the machine fall, and also fall can happen for strain movement of the tripod when the operator has forgot to lock the machine before moving it.
There are articulated arm measuring machines endowed with a locking device applied at the first horizontal axis of the machine, for which such locking device only locks the axis if activated, either manually by pressing a pushbutton or rotating a lever.
These machines have the drawback that manual intervention, as pressing a button, is always necessary to the brake intervention, and the operator can forget to do when there are risk conditions.

### SUMMARY OF THE INVENTION

Main purpose of the present finding is to add an electronic unit or a simple electronic board to the braking device which applies braking force to at least the first segment of the machine and/or other axis or axes of the machine. Said braking of the first segment locks the position of the first segment i.e. the segment closest to the base. More in particular, the braking may be applied to at least the first hinged joint i.e. the hinged joint in the arm closest to the base. In other words, the braking may be applied to at least the first horizontal axis of the machine *i*.*e*. the first horizontal axis of the machine in the arm closest to the base. Such electronic unit, or board, stores the data of the angular position of at the least one axis of the machine and such position data are processed in order to realise the automatic intervention of the braking device both in case of locking or release.
Main purpose of the present finding is to add an electronic unit or a simple electronic board to the braking device applied at the first horizontal axis and/or other axis or axes of the machine; such electronic unit, or board, stores the data of the angular velocity and acceleration of at least one axis of the machine and such data are processed in order to realise the automatic intervention of the braking device in case of fall.

Further purpose of the present finding is to lock automatically the first horizontal axis and/or other axis or axes of the machine after a certain time it is in home position.
These purposes, and more as it will turn out from the following description, according to the invention, are reached by means of a braking system characterised by that:
1. The braking device automatically goes into action through an electronic unit, or even just an electronic board, with a micro-processor where at least one absolute angular value is available for the position of an axis of the machine.
2. The braking device automatically goes into action in braking mode when the velocity or the falling acceleration of one or more axes is more than a value that was previously defined in the firmware or software.
   The braking device automatically goes into action both in braking mode and in release mode when the position of one or more axes of the machine are in previously defined conditions or when a given time delay has gone by since such conditions had been reached.

One embodiment of the invention is an automatic lock and release device for a portable articulated arm measuring machine, comprising a brake configured for braking an axis of the machine, controlled by an electronic unit that activates the brake.

Another embodiment of the invention is an automatic lock and release device for a portable articulated arm measuring machine as described above, wherein the electronic unit that activates the brake with a nominal voltage, and then lowers the voltage applied to the brake, sufficient to lock the position of the first horizontal axis.

Another embodiment of the invention is an automatic lock and release device for a portable articulated arm measuring machine as described above, wherein it is controlled by an electronic unit that processes the angular position of at least one axis of the machine.

Another embodiment of the invention is an automatic lock and release device for a portable articulated arm measuring machine as described above, wherein the electronic unit processing the angular position of at least one axis of the machine is endowed with at least one microprocessor.

Another embodiment of the invention is an automatic lock and release device for a portable articulated arm measuring machine as described above, wherein the electronic unit activates the automatic intervention if one or more axes go over a given angular acceleration.

Another embodiment of the invention is an automatic lock and release device for a portable articulated arm measuring machine as described above, wherein it automatically locks in the rest position after it has been in that position for a predefined time.

Another embodiment of the invention is an automatic lock and release device for a portable articulated arm measuring machine as described above, wherein the electronic unit activates the automatic intervention if the angular position of one or more axes is within a given range.

Another embodiment of the invention is an automatic lock and release device for a portable articulated arm measuring machine as described above, wherein configured for braking the first horizontal axis of the machine.

Another embodiment of the invention is an automatic lock and release device for a portable articulated arm measuring machine as described above, wherein the brake is an electromagnetic brake.

Another embodiment of the invention is a portable articulated arm measuring machine provided with at least one automatic lock and release device as defined above.

Another embodiment of the invention is a method for measuring an object by utilising a portable articulated arm measuring machine as defined above.

### DESCRIPTION OF THE FIGURES

The present invention is here below further explained in some preferred embodiments that are to be considered in all respects as illustrative and not restrictive, with reference made to attached tables and drawings, where:
- **FIG. 1**: shows a portable articulated arm measuring machine
- **FIG. 2**: shows a brake applied to the first horizontal axis of a portable articulated arm measuring machine
- **FIG. 3**: schematically shows an electronic board coupled to the brake and that makes it go into action in locking and in release mode
- **FIG. 4**: schematically shows the machine in working conditions
- **FIG. 5**: schematically shows the machine in home conditions

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The articles "a" and "an" are used herein to refer to one or to more than one, i.e. to at least one of the grammatical object of the article. The recitation of numerical ranges by endpoints includes all integer numbers and, where appropriate, fractions subsumed within that range (e.g. 1 to 5 can include 1, 2, 3, 4 when referring to, for example, a number of axes, and can also include 1.5, 2, 2.75 and 3.80, when referring to, for example, a percentage). The recitation of end points also includes the end point values themselves (e.g. from 1.0 to 5.0 includes both 1.0 and 5.0).

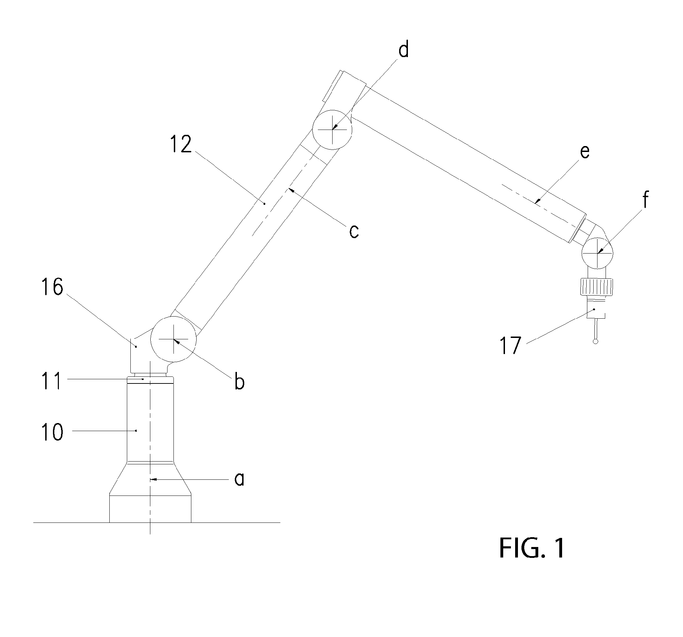

**FIG. 1** shows a six axis articulated arm measuring machine basically consisting of a base **10** that supports a part **11** that rotates around a vertical axis "a" around which fork **16** rotates. Fork **16** then supports arm **12** that is free to rotate around horizontal axis "b", which is a hinged joint. The machine has then further degrees of freedom, at least further four axes, as axes "c", "d", "e" and "d" that allow further movements and other parts that constitute the articulated arm measuring machine up to touch sensor **17.**

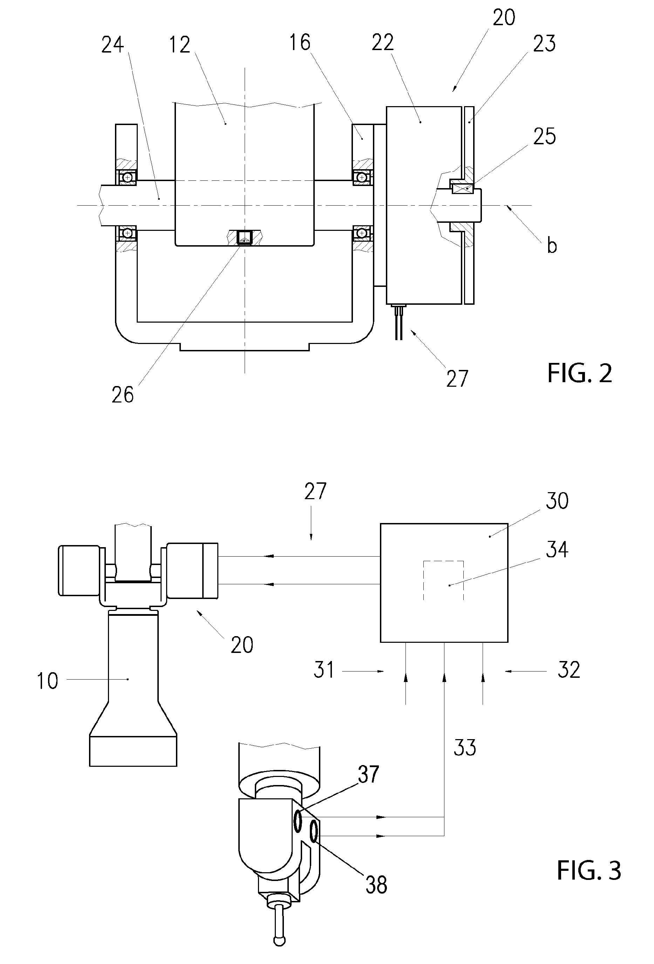

**FIG. 2** shows a vertical section of horizontal axis "b" that allows the first arm **12** to rotate. The fixed part of the brake **20** is fixed on the one side of fork **16;** such brake basically consists of the fixed part **22,** that includes the winding, screwed on fork **16** and of the axially mobile part **23** that is constrained to the rotation of shaft **24** of the machine by means of a key **25** or equivalent constraint. The brake is safe type, so, when not powered, the part **23** is pushed to touch fixed part **22** by means of springs or, when it is an electromagnetic brake, by electromagnetic attraction, therefore it is necessary to go over a threshold torque in order to make it rotate with respect to the fixed part. Because the first arm **12** is rigidly connected to shaft **24** by means of a headless screw **26** and since such shaft **24** is constrained the part **23** by means of key **25** or other constraint, it is possible to let such first arm rotate around axis "b" when the brake is not powered, just by applying a torque equal to the holding torque of the brake.
When the brake is powered through the two wires **27,** the part **23** leaves the fixed part, so shaft **24** is free to rotate around axis "b" together with arm **12,** while the brake gives no torque. The brake may be any kind e.g. electromagnetically activated, pneumatically activated, or servo activated.
**FIG. 3** schematically shows the brake **20** powered by an electronic unit **30,** that may consist of just one only electronic board, that is powered through connection **31** and reads control inputs **33** coming from one or more pushbuttons **37, 38,** and data **32** carrying information about the angular position of one or more axes of the machine and outputs power to the brake through connections **27.** The one or more pushbuttons may alternatively be located, or duplicated on the base **10.**

Inside the electronic unit **30** is at least one microprocessor **34** to process data **32** and control signals **33** to identify the conditions for the activation and the release of the brake.
When the brake is electromagnetic, it needs to be powered with its nominal voltage, but then it is enough to reduce the power voltage in order to maintain the activation and also reduce power dissipation, in order to reduce possible overheating of the measuring machine. The reduced voltage may be 10%, 20%, 30%, 40%, 50% lower than the nominal voltage. Alternatively, the reduced voltage may be 90%, 80%, 70%, 60%, or 50 % of the nominal voltage.

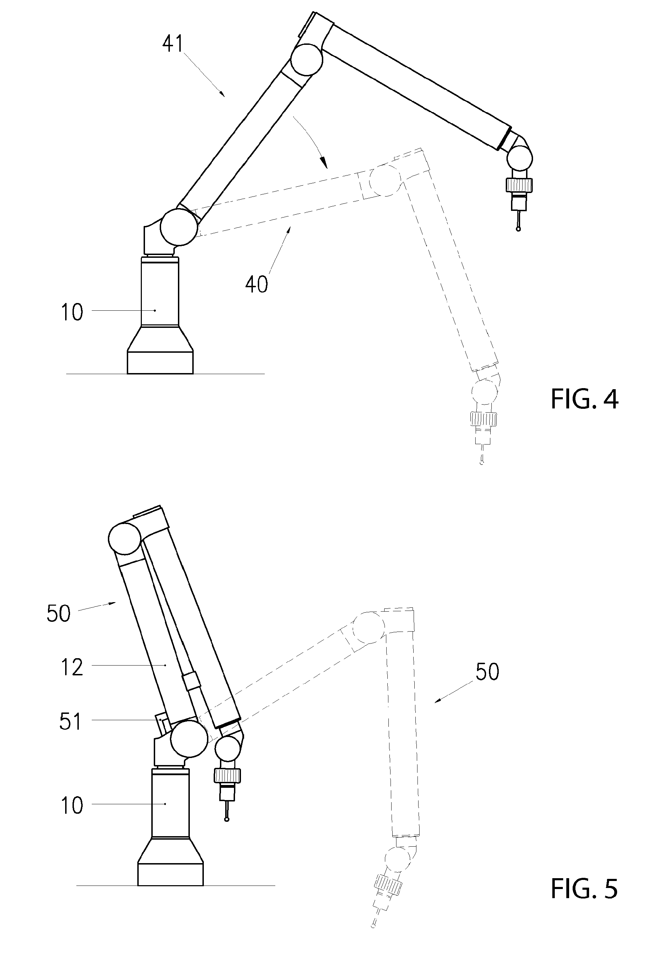

**FIG. 4** shows the operator carrying out a measurement with the measuring machine in position **41.** In case he accidentally lets his hold go and drops the machine, this last one falls moving towards lower positions as **40** and may fall and hit walls that may damage it. The automatic intervention of the brake stops the machine in position **40,** limiting the danger of damage to the machine. The automatic intervention of the brake is given by the electronic unit that measures the velocity or the acceleration of axis "b" and makes the electromagnetic brake go into action when these go over the maximum acceptable value during regular use of the machine.
**FIG. 5** shows the measuring machine in home condition **50** when the first arm **12** is brought to rest on support **51.** Such position is stable, but just an accidental shock may make the machine fall to position **51** with following damage to the machine. The position is stopped by the brake after the machine has been brought to its home position and this prevents it from falling, following to any accidental shock. There may be a small delay between the machine being brought to its home position and the application of the brake; the delay may be 1, 2, 3, 4, 5, 6, 7, 8, 9, 10, 11, 12, 13, 14, 15, 16, 17, 18, 19, or 20 seconds or more. The delay may be user-configurable. In order to perform new measurements with the machine, the brake disable pushbutton **37, 38** must be pressed.
Activation and release of the brake is controlled by the electronic unit 30 that reads the state of the pushbutton **37, 38,** or of the pushbuttons, and the data about the angular position of one or more axes of the machine. The position of the machine is therefore known at any time, as well as the velocities and the accelerations of one or more axes. It is thus possible to choose and to define the conditions that make the brake go into action in relation to such positions, velocities and accelerations in the safest and most suitable way for an easy use of the machine. A possible solution is given as example:
- Brake activation and release directly controlled by means of a pushbutton **37, 38** that, at each press, locks the brake in case it is released and releases the brake in case it is locked.
- The brake locks after five seconds that the machine stays still in home position
- The brake goes into action and locks the machine if the acceleration of axis "b" goes over a given value
- The machine locks in case it is held still for over one second with its last three axes being vertical, while it is automatically released if the second arm is moved sidewards for at least two seconds.

An articulated measuring machine may be equipped with more than one brake. The brake behaviour may be synchronized or decoupled.

Machine safety is increased by the application of an automatic electromagnetic brake, as this prevents the machine from falling in the most likely falling conditions; this further allows better ergonomy when using the machine with easier handling. It is an aspect of the invention that while breaking is applied, the sensor is configured to stop acquisition; this would prevent the user from inadvertently applying too much force on the locked segments.

The present invention also includes a method for measuring an object using a portable articulated arm measuring machine provided with an automatic lock and release device as described herein. It also relates to a method of improving the safety of measuring an object using a portable articulated arm measuring machine by adapting it with an automatic lock and release device as described herein.

The present invention has been illustrated and described in some preferred embodiments, but it is intended that variations in the execution are still possible, within the scope and the protection of the present patent for industrial invention.

## Claims

1. Automatic lock and release device for a portable articulated arm measuring machine, comprising a brake configured for braking an axis of the machine, controlled by an electronic unit that activates the brake.

2. Automatic lock and release device for a portable articulated arm measuring machine according to any of the previous claims, wherein the electronic unit activates the brake with a nominal voltage, and then lowers the voltage applied to the brake, sufficient to lock the position of the first horizontal axis.

3. Automatic lock and release device for a portable articulated arm measuring machine according to any of the previous claims, wherein it is controlled by an electronic unit that processes the angular position of at least one axis of the machine.

4. Automatic lock and release device for a portable articulated arm measuring machine according to any of the previous claims, wherein the electronic unit processing the angular position of at least one axis of the machine is endowed with at least one microprocessor.

5. Automatic lock and release device a portable articulated arm measuring machine according to the previous claims, wherein the electronic unit activates the automatic intervention if one or more axes go over a given angular acceleration.

6. Automatic lock and release device a portable articulated arm measuring machine according to the any of the previous claims, wherein it automatically locks in the rest position after it has been in that position for a predefined time.

7. Automatic lock and release device for a portable articulated arm measuring machine according to the any of the previous claims, wherein the electronic unit activates the automatic intervention if the angular position of one or more axes is within a given range.

8. Automatic lock and release device for a portable articulated arm measuring machine according to the any of the previous claims, where the brake is configured for braking the first horizontal axis of the machine.

9. Automatic lock and release device for a portable articulated arm measuring machine according to the any of the previous claims, wherein the brake is an electromagnetic brake.

10. A portable articulated arm measuring machine provided with at least one automatic lock and release device as defined in any of claims 1 to 9.

11. A method for measuring an object by utilising a portable articulated arm measuring machine as defined in claim 10.
